# EUROPEAN PATENT SPECIFICATION

(11) **EP 3 094 671 B1**
(45) Date of publication and mention of the grant of the patent: **17.04.2019**
(21) Application number: 15701662.7
(22) Date of filing: 16.01.2015
(51) Int. Cl.: C08J 5/18, C08B 37/00, C08L 1/00, C08L 5/00

(54) **PRODUCTION OF GELLED NETWORKS OF POLY ALPHA-1,3-GLUCAN FORMATE AND FILMS THEREFROM**
HERSTELLUNG VON GELIERTEN NETZEN VOM POLY-ALPHA-1,3-GLUCAN-FORMAT UND SCHICHTEN DARAUS
PRODUCTION DE RÉSEAUX GÉLIFIÉS DE POLY-ALPHA-1,3 GLUCANE-FORMIATE ET FILMS FORMÉS À PARTIR DE CEUX-CI

(30) Priority: 17.01.2014 US 201461928595 P
(43) Date of publication of application: 23.11.2016
(73) Proprietor: E. I. du Pont de Nemours and Company, Wilmington, DE 19805 (US)
(72) Inventor: MASSOUDA, Debora Flanagan, Wilmington, Delaware 19810 (US); MISHRA, Vindhya, Wilmington, Delaware 19803 (US)
(74) Representative: Dehns
(86) International application number: PCT/US2015/011724
(87) International publication number: WO 2015/109164

(56) References cited:
- WO-A1-2013/036968
- WO-A1-2014/105696
- WO-A1-2014/105698
- CN-A- 102 766 220
- YUI T ET AL: "Molecular and crystal structure of (1 -> 3)-alpha-d-glucan triacetate", INTERNATIONAL JOURNAL OF BIOLOGICAL MACROMOLECULES, ELSEVIER BV, NL, vol. 14, no. 2, 1 April 1992 (1992-04-01), pages 87-96, XP023319515, ISSN: 0141-8130, DOI: 10.1016/0141-8130(92)90004-R [retrieved on 1992-04-01]

## Description

### FIELD OF THE INVENTION

This invention relates to gelled networks of poly alpha-1,3-glucan formate and poly alpha-1,3-glucan formate films and methods of their preparation.

### BACKGROUND

Glucose-based polysaccharides and their derivatives can be of potential industrial application.

Cellulose is a typical example of such a polysaccharide and is comprised of beta-1,4-D-glycosidic linkages of hexopyranose units. Cellulose is used for several commercial applications such as in manufacture of fibers and films (cellophane). Cellulose for industrial applications is derived from wood pulp. Solutioning of cellulose is a difficult procedure. For cellophane production the most commonly used process for dissolution of cellulose is the 'viscose process' where the cellulose is converted to cellulose xanthate made by treating a cellulose compound with sodium hydroxide and carbon disulfide. The use of this process involves toxic chemicals and significant environmental costs.

Amongst polysaccharide polymers, glucan polymers, with alpha-1,3-glycoside linkages, have been shown to possess significant advantages. U.S. Patent No. 7,000,000 disclosed preparation of a polysaccharide fiber comprising a polymer with hexose units, wherein at least 50% of the hexose units within the polymer were linked via alpha-1,3-glycoside linkages, and a number average degree of polymerization of at least 100. A glucosyltransferase enzyme from Streptococcus salivarius (gtfJ) was used to produce the polymer. From this solution continuous, strong, cotton-like fibers, highly suitable for use in textiles, were spun and used.

It would be desireable to make films composed of a polysaccharide glucan polymer by using solutions of the polysaccharide polymer without using caustic solutions and carbon disulfide. Films can be made either by casting the polymer solution onto a support, or by extrusion through a die. Typically, most industrial film-forming processes are via extrusion, because of lower costs and higher throughput compared to a cast film technique. However, solutions with very low viscosity or highly shear thinning solutions are not amenable to being extruded because of film breakup due to low polymer entanglement. Thus there are requirements on solution rheology that dictate whether it can be extruded or not. Thus it is of interest to find other ways to manipulate the viscosity of polysaccharide solution.

### SUMMARY

The present invention is directed toward a film comprising poly alpha-1,3-glucan formate.

The present invention is also directed toward a gelled network comprising poly alpha-1,3-glucan formate and a solvent composition of formic acid and water.

The present invention is also directed toward a process for making a poly alpha-1,3-glucan formate film comprising: (a) dissolving poly alpha-1,3-glucan in a formic acid and water solvent composition to provide a solution of poly alpha-1,3-glucan formate; (b) adding water to create a gelled network of poly alpha-1,3-glucan formate; (c) contacting the gelled network to a surface or extruding the gelled network of poly alpha-1,3-glucan formate; and (d) removing the solvent composition to form a poly alpha-1,3-glucan formate film.

### DETAILED DESCRIPTION

The term "film" used herein refers to a thin, visually continuous material.

The term "packaging film" used herein refers to a thin, visually continuous material partially or completely emcompassing an object.

The term "gelled network" used herein refers to a physically-linked polymer chains swollen by a solvent which had little to no flow in steady state without application of any shear stress.

The terms "poly alpha-1,3-glucan", "alpha-1,3-glucan polymer" and "glucan polymer" are used interchangeably herein. Poly alpha-1,3-glucan is a polymer where the structure of poly alpha-1,3-glucan can be illustrated as follows (where n is 8 or more):

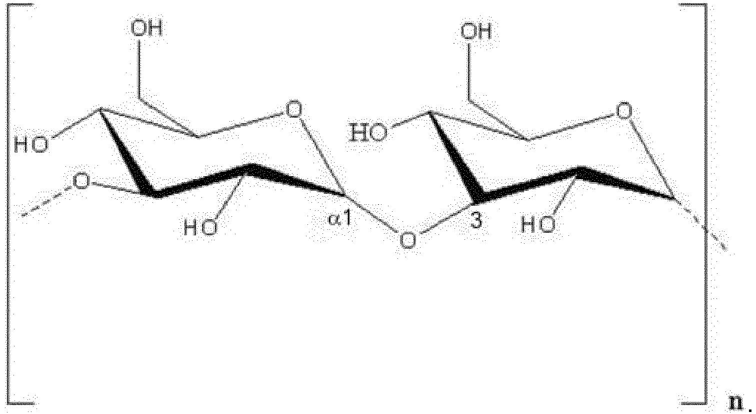

The term "glucan formate" refers to a derivatized form of poly alpha-1,3-glucan where at least one monomer in poly alpha-1,3-glucan has one or more hydroxyl groups of poly alpha-1,3-glucan that have reacted form a formate (-O-CHO).

This invention relates to the method of production of a gelled netowrk of poly alpha-1,3-glucan formate and poly alpha-1,3-glucan formate films produced from polysaccharide poly alpha-1,3-glucan.

Poly alpha-1,3-glucan, useful for certain embodiments of the disclosed invention, can be prepared using chemical methods. Alternatively, it can be prepared by extracting it from various organisms, such as fungi, that produce poly alpha-1,3-glucan. Poly alpha-1,3-glucan useful for certain embodiments of the disclosed invention can also be enzymatically produced from renewable resources, such as sucrose, using one or more glucosyltransferase (e.g. gtfJ) enzyme catalysts found in microorganisms as described in the commonly owned U.S. Patent Application Publication No. 2013/0244288.

A process for making a gelled network of poly alpha-1,3-glucan formate begins with dissolving poly alpha-1,3-glucan in a formic acid and water solvent composition to provide a solution of poly alpha-1,3-glucan formate. The poly alpha-1,3-glucan is mixed into the solvent by application of shear. When poly alpha-1,3-glucan is contacted with concentrated formic acid, one or more hydroxyl groups of poly alpha-1,3-glucan react to form a formate (-O-CHO). The reaction proceeds even at room temperature. The glucan monomer has 3 functional groups that can be derivatized with formate. At the initial stages of the reaction, the polymer appears in a swollen form. For high molecular weight polymer in solutions with polymer concentration of about 10 wt %, the swollen mixture has high viscosity. As the reaction proceeds and as a greater percentage of the backbone is derivatized, the solubility of the polymer in formic acid increases and the polymer goes into solution to form a clear, free-flowing solution. The poly alpha-1,3-glucan is dissolved in the solvent composition at a concentration from about 5 wt % to about 20 wt %, more preferably about 6 wt % to about 15 wt % and most preferably about 7 wt % to about 10%. As the glucan monomer that 3 functional groups that can be derivatized,the maximum degree of substitution (DoS) possible is 3. It should be noted that the process of the invention can produce a poly alpha-1,3-glucan formate film with a DoS of formate of 3 or less depending on reaction conditions. The DoS of formate comprises from at least about 0.1 to 3, preferably from at least about 0.2 to at most about 2.5, more preferably from at least about 0.3 to at most about 2.0 and most preferably from at least about 0.4 to about 1.5. The initial solvent composition comprises at least about 80 wt% formic acid and at most about 20 wt% water and more preferably at least about 87 wt% formic acid and at most about 13 wt% water and most preferably at least about 90 wt% formic acid and at most 10 wt% water. As the reaction proceeds, the concentration of formic acid in the solution decreases while the concentration of water in the solution increases. If after stirring the solution viscosity is high, the stirring may stop, then the solution is left to stand till the solution becomes pourable and stirring is resumed.

This solution can also be used to cast films without the formation of a gelled network. Films can be made either by casting the polymer solution onto a support, or by extrusion through a die. Typically, most industrial film-forming processes are via extrusion, because of lower costs and higher throughput compared to a cast film technique. However, solutions with very low viscosity or highly shear thinning solutions are not amenable to being extruded because of film breakup due to low polymer entanglement. Furthermore, solutions can be extruded either directly into a coagulation bath or extruded onto a surface and taken into a coagulation bath, either with or without an air-gap. Thus there are requirements on solution rheology that dictate whether it can be extruded or not. The present invention is directed towards formation of a gelled network. Presence of a gelled network during extrusion can increase processability. A gelled network can be subjected to greater extensional forces compared to a solution. A gelled network may be able to survive extrusion directly into a coagulation bath, while a solution may need a support or may not survive the extrusion process. In a gelled network, the polymer is in a "gel" state, only partially liquid, which keeps the polymer chains in a bound network, which can then be oriented under extensional forces. Highly entangled polymer networks can be obtained by increasing polymer concentration in solution, however there is a limit to how much the viscosity of the solution can be increased by increasing polymer concentration either due to solubility limits of the polymer in the solvent system, or due to difficulty in achieving uniform mixing at high concentrations by standard techniques. Increase in viscosity by using a high molecular weight polymer is also limited by the availability of high molecular weight grades of the polymer. Thus, the ability to form a gelled network translates to a larger window of processability.

For formation of a gelled network, a solution of glucan formate in formic acid is taken. The intial solvent composition used to make the solution comprises at least about 80 wt% formic acid and at most about 20 wt% water and more preferably at least about 87 wt% formic acid and at most about 13 wt% water and most preferably at least about 90 wt% formic acid and at most 10 wt% water. Water is then added to the solution and stirred rapidly. If insufficient amount of water is added, then the viscosity of the solution decreases upon addition of water. If sufficient water is added, the mixture increases in viscosity and turns into a gelled network. For formation of a gelled network from a solution of DPw 550 polymer with initial polymer concentration of 10 wt% and initial solvent composition of 90% formic acid and 10% water, the solvent composition is diluted to at most about 70% formic acid and at least about 30% water, more preferably at most about 68% formic acid and at least about 32% water and most preferably at most about 65% formic acid and at least about 35% water to form a gelled network. For formation of a gelled network from a solution of DPw 800 polymer with an initial polymer concentration of 11 wt% and initial solvent composition used to make the solution of 98% formic acid, the solvent composition can be diluted down to 90% formic acid to form a gelled network.

The gelled network was used to prepare cast films to demonstrate its utility in preparing articles such as films. The gelled network was centrifuged to remove air bubbles. Typically the films were produced by casting the solution onto a substrate using a rod coater or a draw down coater but can also be produced by other solution film-formation such as extrusion through a slot die. Due to lack of availability of film extruding equipment, films were prepared only by casting method, however translation into film extrusion will be obvious to those familiar with the art. The gelled network can be extruded onto a surface or or directly into a bath, with or without an air-gap, and then if desired, onto a surface for further treatment. The substrates include but are not limited to glass (coated with or without surfactant). Due to the crosslinking of the gelled network, the gelled network may be extruded through a die slot eliminating the need for a support. In one embodiment of the invention, the gelled network was cast onto a glass support, the solvent composition of formic acid and water was removed by air drying to form the poly alpha-1,3-glucan formate film. Generally, the solvent composition can be removed by evaporation at room temperature or elevated temperature and at room pressure or reduced pressure. It can also be removed by coagulation into a non-solvent bath such as water which results in coagulation of the gelled network and removal of residual formic acid and water. The film may be repeatedly washed to remove residual solvent. It should be noted that depending on the solvent composition removal technique, some residual solvent composition or its' constituents may be present in small amounts. The film may be heated. The film-formation steps may include air drying, coagulation, washing and post-coagulation air-drying followed by peeling the film off of the substrate. The exact sequence of steps is varied to get poly alpha (1,3) glucan formate films of different properties. The films thus obtained may be clear and transparent or translucent. They are flexible and can be used as packaging films. The films exhibit good barrier to oxygen permeation, and moderate barrier to water vapor.

The degree of substitution of the glucan formate groups can be decreased by soaking the film in dilute sulfuric acid, where the extent of the soak time and the concentration of the bath controls the reduction in the DoS. The formyl groups may also be removed by heat treatment, such as by boiling in water or by treatment with basic solutions or other chemical methods known for de-esterification. The films thus obtained are clear and transparent. The films with low formate content can be swollen by water. They can have a glossy or a matte appearance. They are flexible and exhibit good dead fold characteristics. They can be twisted and dyed. The films can be used as packaging films. These regenerated films exhibit good barrier to oxygen permeation, and poor barrier to water vapor.

This invention relates to a film comprising poly alpha-1,3-glucan formate. The film can be a packaging film.

This invention also relates to a gelled network comprising poly alpha-1,3-glucan formate and a solvent composition of formic acid and water. The poly alpha-1,3-glucan formate can comprise a concentration from about 5 wt % to about 20 wt %. The solvent composition can comprise at most about 90% formic acid and at least about 10% water.

This invention further relates to a process for making a poly alpha-1,3-glucan formate film comprising: (a) dissolving poly alpha-1,3-glucan in a formic acid and water solvent composition to provide a solution of poly alpha-1,3-glucan formate; (b) adding water to create a gelled network of poly alpha-1,3-glucan formate; (c) contacting the gelled network to a surface or extruding the gelled network of poly alpha-1,3-glucan formate; and (d) removing the solvent composition to form a poly alpha-1,3-glucan formate film. The poly alpha-1,3-glucan can be dissolved in the solvent composition at a concentration from about 5 wt % to about 20 wt %. The solvent composition of the solution of poly alpha-1,3-glucan formate can comprise at least about 75% formic acid and at most about 25% water. The solvent composition of the gelled network of poly alpha-1,3-glucan formate can comprise at most about 90% formic acid and at least about 10% water. Removing the solvent composition can comprise an optional evaporation step, coagulation (in water or dilute acid), followed by additional wash steps, followed by a final drying step.

### TEST METHODS

In the non-limiting examples that follow, the following test methods were employed to determine various reported characteristics and properties.

Degree of Polymerization (DPw) and Polydispersity Index (PDI) were determined by Multidetector Size Exclusion Chromatography (SEC) method. The chromatographic system used was Alliance™ 2695 separation module from Waters Corporation (Milford, MA) coupled with three on-line detectors: differential refractometer (DR) 2410 from Waters, multiangle light scattering photometer Heleos™ 8+ from Wyatt Technologies (Santa Barabara, CA) and differential capillary viscometer ViscoStar™ from Wyatt. The software packages used for data reduction were Empower™ version 3 from Waters (column calibration with broad glucan standard, DR detector only) and Astra version 6 from Wyatt (triple detection method without column calibration). Four SEC styrene-divinyl benzene columns from Shodex (Japan) were used - two linear KD-806M, KD-802 and KD-801 to improve resolution at low molecular weight region of a polymer distribution. The mobile phase was N, N'- Dimethyl Acetamide (DMAc) from J.T Baker, Phillipsburg, NJ with 0.11% LiCl (Aldrich, Milwaukee, WI). The chromatographic conditions were as follows: temperature at column and detector compartments: 50°C, temperature at sample and injector compartments: 40°C, flow rate: 0.5 ml/min, injection volume: 100 ul. The sample preparation targeted 0.5 mg/mL sample concentration in DMAc with 5% LiCI, shaking overnight at 100°C. After dissolution, polymer solution can be stored at room temperature. This method was used to measure molecular characteristics of glucan polymers (average molecular weights and degree of polymerization, molecular weight distribution and PDI).

Degree of Substitution (DoS) was determined from 1H nuclear magnetic resonance spectroscopy (NMR) and IR analysis. Approximately 20mg of the polymer sample was weighed into a vial on an analytical balance. The vial was removed from the balance and 0.7 mL of deuterated trifluoroacetic acid was added to the vial. A magnetic stir bar was added to the vial and the mixture was stirred until the solid sample dissolves. Deuterated benzene (C6D6), 0.3 mL, was then added to the vial in order to provide a better NMR lock signal than the TFA,d would provide. A portion, 0.8 mL, of the solution was transferred, using a glass pipet, into a 5 mm NMR tube. A quantitative ¹H NMR spectrum was acquired using an Agilent VnmrS 400 MHz NMR spectrometer equipped with a 5 mm Auto switchable Quad probe. The spectrum was acquired at a spectral frequencyof 399.945 MHz, using a spectral window of 6410.3 Hz, an acquisition time of 1.278 seconds, an inter-pulse delay of 10 seconds and 124 pulses. The time domain data was transformed using exponential multiplication of 0.78 Hz. Two regions of the resulting spectrum were integrated; from 3.1 ppm to 6.0 ppm, that gives the integral for the 7 protons on the poly alpha-1,3-glucan ring, and from 7.7 ppm to 8.4 ppm that gives the integral for the protons on the formate group. The degree of substitution was calculated by dividing the formate protons integral area by one seventh of the poly alpha-1,3-glucan ring protons integral area. For estimation of formyl content using Perkin-Elmer Universal ATR sampling accesory and the data analyzed using Spectrum software. The relative ratios of the intensities of the IR signals corresponding to the glucan ring backbone (peak position ∼ 1015) and peak corresponding to the C=O carbonyl stretch of the formyl group located at 1713 were calculated and were used as a measure of DoS using IR analysis.

Film Clarity was determined using an Agilent (Varian) Cary 5000 uv/vis/nir spectrophotometer equipped with a DRA-2500 diffuse reflectance accessory in transmission mode. The DRA-2500 is a 150mm integrating sphere with a Spectralon® coating. Total and diffuse transmission for the instrument and the samples are collected over the wavelength range of 830 nm to 360 nm. The calculations are made in accordance with ASTM D1003 using a 2 degree observer angle and illuminant C (represents average daylight, color temperature 6700K).

Thickness of the film was determined using a Mitutoyo micrometer, No. 293-831 and reported in mm.

### EXAMPLES

### Preparation of Poly alpha-1,3-glucan

Poly alpha-1,3-glucan using a gtfJ enzyme preparation, was prepared as described in the commonly owned U.S. Patent Application Publication No. 2013/0244288.

### Materials

Formic acid was from Sigma Aldrich (St. Louis, MO).

### The following abbreviations were used in the Examples

"DI water" is deionized water; "MPa" is megapascal; ""mm" is millimeters; "ml" is millilters; "mg" is milligrams; "wt %" is weight percent; "gf" is grams force; "gsm" is grams per square meter; "cm" is centimeter; "PDI" is the polydispersity index; "DPw" is weight average degree of polymerization.

### Example 1

### Formation of a Gelled Network from a Solution and Casting of Film Thereof

Poly alpha-1,3-glucan with a DPw of 1050 was dissolved in 90% formic acid and 10% deionized water (DI) water to make a 10 wt % solution. The solution was stirred and the viscosity increased significantly forming a thick gel-like consistency. The stirring was stopped and solution was left to stand for 10 days. The viscosity of the solution had decreased after 10 days and the solution was pourable. To 20 gm of this solution, 6 gm of water was added and stirred rapidly. The final solvent composition in the mixture was 67.5% formic acid and 32.5% water. The mixture increased in viscosity and turned into a gelled network. The mixture was centrifuged to remove majority of the air bubbles and left overnight. The next morning, the mixture was still a gelled network. The gelled network was spread onto a glass plate and cast as a film using a draw-down rod. The film was dried to evaporate majority of the formic acid and water. The film was washed in a water bath till the pH of the bath remained neutral. The film was dried. The film formed was flexible and translucent.

### Comparative Example A

### No Gelation

The solution of Comparative Example A was prepared in a similar manner to the soluton of Example 1 by dissolving the polymer in 90% formic acid and 10% water and letting it stand for 10 days. To 7 gm of this 10 day aged solution, 1.5 gm of water was added and stirred rapidly. The final solvent composition in the mixture was 72% formic acid and 28% water. No significant increase in viscosity was observed and no gelled network was observed. Insufficient water was added to create the gelled network.

### Example 2

### Gelation

To 7 gm of the solution of Comparative Example A, an additional 1 gm of water was added and stirred rapidly. The final solvent composition in the mixture was 64% formic acid and 36% water. The solution viscosity increased dramatically to form a gelled network.

### Example 3

### Glucan Formate Film with Low Molecular Weight Polymer

Poly alpha-1,3-glucan with a DPw of 550 was dissolved in 90% formic acid and 10% deionized water (DI) water to make a 10 wt % solution. The solution was stirred overnight. The solution was clear and much lower in viscosity than the solution made in Example 1. To 10.7 gm of solution, 3.77 gm of water was added and stirred rapidly. The final solvent composition in the mixture was 65% formic acid and 35% water. The mixture increased in viscosity and turned into a gelled network. The mixture was centrifuged to remove air bubbles. The gelled network was spread onto a plate and cast as a film using a draw-down rod. The film was air-dried for 2 hours and then washed in a water bath till the pH of the bath remained neutral. The film formed was flexible and translucent with a haze of 5.95% and thickness of about 0.025 mm.

### Comparative Example B

### Lower Formic Acid Concentration Effect

An attempt was made to dissolve poly (alpha 1,3 glucan) polymer as in Example 3 in 65% formic acid and 35% water mixture. Even after overnight mixing, the polymer did not dissolve and remained as a slurry. This demonstrates that the polymer must first be dissolved then the formic acid concentration reduced to form the gelled network.

### Example 4

### Formation of Gelled Network with a Different Initial Solution Composition

Twenty-two gm of poly alpha-1,3-glucan (DPw =800) was mixed with 178 g 98%+ formic acid in a 500 mL round-bottom flask. It was mixed with an overhead stirring motor and a glass rod with a half moon stirrer paddle. The polymer concentration in the solution was 11 wt %. The solution was stirred and the viscosity increased significantly forming a thick gel-like consistency. After mixing for 18 hours, the glucan solid has appeared to have completely dissolved. The solution is smooth, uniform, clear and flowable. It is fairly viscous. A small sample was taken and precipitated and washed in methanol. It was then dried in a vacuum oven and the degree of substituion was measured using NMR.The degree of subsitution was found to be 1.62. 19.8 g of water was then slowly added to the mixture under heavy mixing. The final mixture composition was 10% polymer, 90% formic acid, 10% water. The mixture increased in viscosity and turned into a gelled network. The gelled network was spread onto a glass plate and cast as a film using a draw-down rod. The film was washed in a water bath till the pH of the bath remained neutral. The film formed was translucent and had a textured appearance. The degree of substituion of the film was measured using NMR and was found to be 1.4. Thus addition of water resulted in reduction in degree of substituion of the glucan formate.

### Comparative Example C

### Formation of Solution with a Different Initial Solution Composition

Poly alpha-1,3-glucan with a DPw of 800 was dissolved in 90% formic acid and 10% deionized water (DI) water to make a 10 wt % solution. It was mixed with an overhead stirring motor and a glass rod with a half moon stirrer paddle. The solution was stirred and the viscosity increased significantly forming a thick gel-like consistency. After mixing for 18 hours, the glucan solid has appeared to have completely dissolved. The solution is smooth, uniform, clear and flowable. It is fairly viscous. The final mixture composition was 10% polymer, 90% formic acid, 10% water. This solution has the same composition as the gelled network in Example 4, but it is a smooth, flowing , clear solution. The solution network was spread onto a glass plate and cast as a film using a draw-down rod. The film was washed in a water bath till the pH of the bath remained neutral. The film formed was completely uniform and transparent, unlike the film of Example 4.

## Claims

1. A film comprising poly alpha-1,3-glucan formate.

2. The film according to claim 1 wherein the film is a packaging film.

3. A gelled network comprising poly alpha-1,3-glucan formate and a solvent composition of formic acid and water.

4. The gelled network according to claim 3, wherein the poly alpha-1,3-glucan formate comprises a concentration from 5 wt % to 20 wt %.

5. The gelled network according to claim 3, wherein the solvent composition comprises at most 90% formic acid and at least 10% water.

6. A process for making a poly alpha-1,3-glucan formate film comprising:
(a) dissolving poly alpha-1,3-glucan in a formic acid and water solvent composition to provide a solution of poly alpha-1,3-glucan formate;
(b) adding water to create a gelled network of poly alpha-1,3-glucan formate;
(c) contacting the gelled network to a surface or extruding the gelled network of poly alpha-1,3-glucan formate; and
(d) removing the solvent composition to form a poly alpha-1,3-glucan formate film.

7. The process according to claim 6, wherein the poly alpha-1,3-glucan is dissolved in the solvent composition at a concentration from 5 wt % to 20 wt %.

8. The process according to claim 6, wherein the solvent composition of the solution of poly alpha-1,3-glucan formate comprises at least 80% formic acid and at most 20% water.

9. The process according to claim 6, wherein the solvent composition of the gelled network of poly alpha-1,3-glucan formate comprises at most 90% formic acid and at least 10% water.

10. The process according to claim 6, wherein removing the solvent composition comprises an optional evaporation step, coagulation (in water or dilute acid), followed by additional wash steps, followed by a final drying step.

## Patentansprüche

1. Folie umfassend Poly-alpha-1,3-glucanformiat.

2. Folie nach Anspruch 1, wobei die Folie eine Verpackungsfolie ist.

3. Geliertes Netzwerk umfassend Poly-alpha-1,3-glucanformiat und eine Lösungsmittelzusammensetzung von Ameisensäure und Wasser.

4. Geliertes Netzwerk nach Anspruch 3, wobei das Poly-alpha-1,3-glucanformiat eine Konzentration von 5 Gew.-% bis 20 Gew.-% umfasst.

5. Geliertes Netzwerk nach Anspruch 3, wobei die Lösungsmittelzusammensetzung höchstens 90 % Ameisensäure und mindestens 10 % Wasser umfasst.

6. Verfahren für die Herstellung einer Poly-alpha-1,3-glucanformiatfolie umfassend:
(a) Lösen von Poly-alpha-1,3-glucan in einer Ameisensäure- und Wasser-Lösungsmittelzusammensetzung, um eine Lösung von Poly-alpha-1,3-glucanformiat bereitzustellen;
(b) Zugeben von Wasser, um ein geliertes Netzwerk von Poly-alpha-1,3-glucanformiat bereitzustellen;
(c) Kontaktieren des gelierten Netzwerks mit einer Oberfläche oder Extrudieren des geliertes Netzwerks von Poly-alpha-1,3-glucanformiat; und
(d) Entfernen der Lösungsmittelzusammensetzung, um eine Poly-alpha-1,3-glucanformiatfolie zu bilden.

7. Verfahren nach Anspruch 6, wobei das Poly-alpha-1,3-glucan in der Lösungsmittelzusammensetzung in einer Konzentration von 5 Gew.-% bis 20 Gew.-% gelöst wird.

8. Verfahren nach Anspruch 6, wobei die Lösungsmittelzusammensetzung der Lösung von Poly-alpha-1,3-glucanformiat mindestens 80 % Ameisensäure und höchstens 20 % Wasser umfasst.

9. Verfahren nach Anspruch 6, wobei die Lösungsmittelzusammensetzung des gelierten Netzwerks von Poly-alpha-1,3-glucanformiat höchstens 90 % Ameisensäure und mindestens 10 % Wasser umfasst.

10. Verfahren nach Anspruch 6, wobei das Entfernen der Lösungsmittelzusammensetzung einen wahlweisen Verdampfungsschritt, Koagulation (in Wasser oder verdünnter Säure), gefolgt von zusätzlichen Waschschritten, gefolgt von einem abschließenden Trockungsschritt umfasst.

## Revendications

1. Film comprenant du poly(formate d'alpha-1,3-glucane).

2. Film selon la revendication 1, le film étant un film d'emballage.

3. Réseau gélifié comprenant du poly(formate d'alpha-1,3-glucane) et une composition de solvant d'acide formique et d'eau.

4. Réseau gélifié selon la revendication 3, le poly(formate d'alpha-1,3-glucane) comprenant une concentration de 5 % en pds à 20 % en pds.

5. Réseau gélifié selon la revendication 3, la composition de solvant comprenant au plus 90 % d'acide formique et au moins 10 % d'eau.

6. Procédé de fabrication d'un film de poly(formate d'alpha-1,3-glucane) comprenant:
(a) la dissolution de poly(alpha-1,3-glucane) dans une composition de solvant acide formique et eau pour fournir une solution de poly(formate d'alpha-1,3-glucane);
(b) l'addition d'eau pour créer un réseau gélifié de poly(formate d'alpha-1,3-glucane);
(c) la mise en contact du réseau gélifié avec une surface ou l'extrusion du réseau gélifié de poly(formate d'alpha-1,3-glucane); et
(d) l'élimination de la composition de solvant pour former un film de poly(formate d'alpha-1,3-glucane).

7. Procédé selon la revendication 6, le poly(alpha-1,3-glucane) étant dissous dans la composition de solvant sous une concentration de 5 % en pds à 20 % en pds.

8. Procédé selon la revendication 6, la composition de solvant de la solution de poly(formate d'alpha-1,3-glucane) comprenant au moins 80 % d'acide formique et au plus 20 % d'eau.

9. Procédé selon la revendication 6, la composition de solvant du réseau gélifié de poly(formate d'alpha-1,3-glucane) comprenant au plus 90 % d'acide formique et au moins 10 % d'eau.

10. Procédé selon la revendication 6, l'élimination de la composition de solvant comprenant une étape d'évaporation facultative, la coagulation (dans de l'eau ou de l'acide dilué), suivies d'étapes de lavage additionnelles, suivies d'une étape de séchage finale.
